(19) Europäisches Patentamt
European Patent Office
Office européen des brevets

(11) Veröffentlichungsnummer: **0 148 443 B1**

(12) **EUROPÄISCHE PATENTSCHRIFT**

(45) Veröffentlichungstag der Patentschrift: **22.04.87**

(51) Int. Cl.⁴: **C 08 K 5/15**, C 08 L 29/04, B 32 B 27/08, B 32 B 27/22, B 32 B 27/30

(21) Anmeldenummer: **84115222.6**

(22) Anmeldetag: **12.12.84**

(54) **Weichgemachter Polyvinylalkohol.**

(30) Priorität: **24.12.83 DE 3347075**

(43) Veröffentlichungstag der Anmeldung: **17.07.85 Patentblatt 85/29**

(45) Bekanntmachung des Hinweises auf die Patenterteilung: **22.04.87 Patentblatt 87/17**

(84) Benannte Vertragsstaaten: **DE FR GB IT**

(56) Entgegenhaltungen: **FR - A - 2 214 710**

(73) Patentinhaber: **BAYER AG, Konzernverwaltung RP Patentabteilung, D-5090 Leverkusen 1 Bayerwerk (DE)**

(72) Erfinder: **Salzburg, Herbert, Dr., Hahnenweg 3, D-5000 Köln 80 (DE)**
Erfinder: **Reinking, Klaus, Dr., Robert-Stolz-Strasse 16b, D-5632 Wermelskirchen (DE)**
Erfinder: **Kleiner, Frank, Dr., Am Sonnenhang 62, D-5090 Leverkusen 3 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Polyvinylalkohol besitzt in trockenem Zustand eine sehr geringe Durchlässigkeit für Gase, wie z.B. Stickstoff, Sauerstoff und Kohlerndioxid, sowie für flüchtige Aromastoffe und kann daher zur Herstellung gas- und aromadichter Folien und Behälter verwendet werden.

Da die Gassperrwirkung von Polyvinylalkohol nur im trockenen Zustand besteht, Polyvinylalkohol jedoch hygroskpisch und in Wasser löslich ist, können gasdichte Verpackungen mit Polyvinylalkohol als Sperrschicht nur Verbundsysteme sein, bei denen die Polyvinylalkohol-Schicht auf beiden Seiten mit hydrophoben Schichten, z.B. Polyolefinen oder Polyvinylidenchlorid, gegen den Zutritt der Luftfeuchtigkeit geschützt ist.

Verbundfolien können hergestellt werden u.a. durch Lackieren oder durch Kaschieren oder Laminieren einer vorgefertigten Folie. Da diese Verfahren jedoch stets einen oder mehrere zusätzliche Verfahrensschritte bedeuten, gibt man der Coextrusion zur Herstellung von Verbundfolien vielfach den Vorzug.

Die Herstellung von Verbundfolien durch Coextrusion setzt aber auch voraus, dass alle Komponenten thermoplastisch verarbeitbar sind.

Polyvinylakohol ist in reiner Form thermoplastisch nicht verarbeitbar, denn er zersetzt sich unterhalb seines Erweichungspunktes. Folien aus reinem Polyvinylakohol sind darüber hinaus spröde und nicht tiefziehfähig. Man hat versucht, die Bearbeitbarkeit von Polyvinylakohol durch Einarbeitung von Weichmachern zu verbessern, wobei auch die Sprödigkeit behoben wird.

Die am häufigsten verwendeten Weichmacher sind flüssige Polyole, wie Ethylenglykol oder Glycerin. Polyvinylalkohol, der durch diese Materialien modifiziert ist, lässt sich thermoplastisch verarbeiten, z.B. durch Extrudieren. Dabei stellt man jedoch fest, dass die Weichmacher aufgrund ihrer Flüchtigkeit während der Extrusion teilweise verdampfen oder sich, wie das am meisten eingesetzte Glycerin, thermisch zersetzen. Das hierbei entstehende Acrolein stellt aufgrund seiner Geruchsbelästigung eine Belastung dar.

Diese Nachteile lassen sich vermeiden, wenn man die Extrusionstemperatur von ca. 200-220°C durch Zugabe von geringen Mengen Wasser auf ca. 120°C senkt. Bei dieser Temperatur ist jedoch die Herstellung von polyvinylalkoholhaltigen Verbundfolien durch Coextrusion nicht möglich.

Feste Polyole, die den oben genannten Nachteil der Flüchtigkeit der flüssigen Polyole bei der thermoplastischen Verarbeitung nicht aufweisen, sind z. B. Sorbit oder Pentaerythrit. Es hat sich aber gezeigt, dass extrudierte Folien aus mit festem Polyolen modifiziertem Polyvinylalkohol im Gegensatz zu Folien aus mit flüssigen Polyolen modifiziertem Polyvinylalkohol sehr spröde und nicht tiefziehfähig sind und nur geringe Sperrwirkungen für Gase und Aromastoffe besitzen, da sie sehr inhomogen sind und daher zahlreiche Fehlstellen aufweisen.

Um die gewünschte Eigenschaft der Gas- und Aromadichtigkeit zu erhalten, verbietet sich die Anwendung von nicht vollständig verseiftem Polyvinylacetat, da derartige Copolymere des Vinylalkohols und Vinylacetats zwar extrudierbar sind, aber nur geringe Gas- und Aromasperrwirkungen besitzen.

Eine weitere Möglichkeit, die Extrusionsfähigkeit des Polyvinylalkohols herzustellen, besteht darin, andere Comonomere in die Polyvinylalkohol-Moleküle einzubauen, z.B. durch Copolymerisation von Vinylacetat mit Ethylen und anschliessender Verseifung des entstandenen Polyvinylacetats. Die Gasdurchlässigkeit derartiger Ethylen-Vinylalkohol-Copolymere hängt vor allem von deren Ethylengehalten ab. Die Ethylen-Vinylalkohol-Copolymeren, die in ihrer Gassperrwirkung dem Polyvinylalkohol nahekommen, enthalten ≤ 20% Ethylen.

Derartige Materialien sind bereits handelsüblich. Folien daraus sind jedoch kaum tiefziehfähig. Aus diesem Grunde werden vorwiegend Ethylen-Vinylalkohol-Coplymere, die ca. 30% Ethylen enthalten, zur Herstellung von Mono- und Verbundfolien für Verpackungszwecke eingesetzt. Die Gassperrwirkung dieser Ethylen-Vinylalkohol-Copolymeren ist jedoch beträchtlich geringer als die von Polyvinylalkohol.

Der Erfindung liegt die Erkenntnis zugrunde, dass 1,4-Monoanhydrohexite und 1,4-3,6-Dianhydrohexite hervorragende Weichmacher für Polyvinylalkohol darstellen. Die Nachteile der Weichmachersysteme des Standes der Technik — Flüchtigkeit, thermochemischer Abbau, unbefriedigende thermoplastische Verarbeitbarkeit, fehlende Coextrudierbarkeit, sowie Sprödigkeit, Inhomogenität und mangelnde Tiefziehfähigkeit der Folien — werden unter Erhaltung der gewünschten Gas- und Aromasperreigenschaften vermieden.

Dies ist daher insbesonders überraschend, weil die den Mono- oder Dianhydrohexiten zugrundeliegenden Hexite, z.B. Sorbit, als Polyvinylalkohol-Weichmacher die oben genannten Nachteile in hohem Masse mitbringen.

Es ist weiterhin überraschend, dass die erfindungsgemässen Weichmacher, obwohl sie Feststoffe sind, die bekannten oben geschilderten Nachteile von Feststoffweichmachern nicht mitbringen.

Gegenstand der Erfindung ist somit ein weichgemachter Polyvinylalkohol, der 1 bis 35 Gew.-%, bevorzugt 4 bis 27 Gew.-%, bezogen auf die gesamte Mischung, eines oder mehrerer 1,4-Monoanhydrohexite und/oder eines oder mehrerer 1,4-3,6-Dianhydrohexite enthält.

Ein weiterer Gegenstand der Erfindung ist die Verwendung von weichgemachtem Polyvinylalkohol zur Herstellung von Verbundfolien durch Coextrusion.

Polyvinylalkohole im Sinne der Erfindung sind bevorzugt solche mit Viskositäten von 4 bis 66 mPa.s (gemessen nach DIN 53 015 als 4%ige wässrige Lösungen bei 20°C). Sie werden im allgemeinen erhalten durch Polymerisation von Vinylacetat und anschliessende Verseifung. Der Verseifungsgrad ist mindestens 95%, bevorzugt mindestens 98%.

1,4-Monoanhydrohexite sind Verbindungen der Formel I und 1,4-3,6-Dianhydrohexite sind Verbindungen der Formel II.

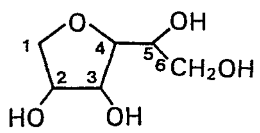

(I)

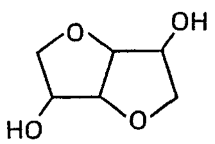

(II)

Beide Verbindungstypen sind bekannt, sie können nach literaturbekannten Verfahren erhalten werden durch Entzug von einem bzw. zwei Mol Wasser aus Hexiten der Formel

$$CH_2OH(CHOH)_4\text{-}CH_2OH$$

Insbesondere sind geeignet die Monoanhydro- bzw. Dianhydro-Derivate von Sorbit, Mannit und Idit. Diese Derivate entsprechen alle der Formel I bzw. der Formel II, sie unterscheiden sich nur durch die sterische Anordnung der OH-Gruppen. Erfindungsgemäss können Monoanhydrohexite einzeln oder Dianhydrohexite einzeln verwendet werden. Es ist bevorzugt ein Gemisch einzusetzen, z.B. ein Gemisch mehrerer stereoisomerer 1,4-Monoanhydrohexite, es ist auch möglich, Monoanhydrohexite und Dianhydrohexite gemischt zu benutzen. Während die reinen Verbindungen im allgemeinen fest sind, sind die meisten Mischungen Flüssigkeiten und daher leichter zu dosieren.

Die Anhydrohexite können dem Polyvinylalkohol nach an sich bekannten Methoden zugesetzt werden, bevorzugt löst man die Polyvinylalkohole in einem geeigneten Lösungsmittel, z.B. einem Alkohol oder bevorzugt Wasser auf und fügt dann den Hexit oder die Hexite zu. Um das Wasser aus diesen Lösungen zu entfernen, kann man beispielsweise eine Eindampfschnecke benutzen, die den weichgemachten Polyvinylalkohol direkt als Granulat liefert.

Erstaunlicherweise ergeben die erfindungsgemäss weichgemachten Polyvinylalkohole klar durchsichtige Folien mit erheblich besserer Sperrwirkung, z.B. gegen Sauerstoff oder Kohlendioxid, als vergleichbare Ethylenvinylalkohol-Copolymerisate. Um etwa die gleiche Sperrwirkung zu erreichen, braucht die Folie aus dem erfindungsgemässen Material nur etwa die halbe Stärke zu haben.

Die erfindungsgemässen Folien sind geeignet zur Herstellung von Verbundfolien mit z.B. Folien aus thermoplastischen Kunststoffen wie Polyethylen, Polypropylen, Polyamid 6, Polyamid 66, Polycarbonat, Polyethylenterephthalat oder Polybutylenterephthalat, Polyvinylchlorid, Polyvinylidenchlorid.

Zur Herstellung solcher Verbundfolien können die üblichen Verfahren wie Coextrusion, Beschichtung, Kaschieren und Laminieren verwendet werden.

Folien aus dem erfindungsemässen Material sind insbesondere mit Polyamidfolien verträglich, so dass sich entsprechende Verbundfolien leicht herstellen lassen; die Folien sind auch im Verbund mit Polyamidfolien tiefziehfähig. Besonders geeignet sind Folien aus Polyamid 6, Polyamid 6,6 oder aus Copolyamiden aus Caprolactam, Hexamethylendiamin und Adipinsäure.

Es ergibt sich daraus die besondere Eignung der erfindungsgemässen Masse zur Herstellung von Sauerstoff- und Kohlendioxid-dichten Behältern.

*Beispiele*

*Herstellung des weichgemachten Polyvinylalkohols*

Die folgenden Gemische wurden in 9 kg Wasser unter Erwärmung gelöst (bis 100°C).

In einem Doppelschnecken-Verdampfer zu einem rieselfähigen Granulat bei 170-200°C/20 mm Hg eindampffähig sind:

| PVAL+ (g) | Viskosität 1) mPa.s | Verseifungsgrad (Mol.-%) | Additiv | Menge (g) |
|---|---|---|---|---|
| 750 | 20 | 98 | DAS 2) | 250 |
| 700 | 28 | 99 | DAS | 300 |
| 800 | 20 | 98 | DAS | 200 |
| 820 | 28 | 99 | DAS/MAS 3) | 90/90 |
| 840 | 28 | 99 | DAS/DAM 4) | 140/30 |
| 820 | 28 | 99 | DAS/DAM/DAI 5) | 120/30/20 |
| 920 | 28 | 99 | MAS/DAM | 40/40 |
| 960 | 28 | 99 | DAS | 40 |

1) 4%ige wässrige Lösung, 20°C; nach DIN 53015
2) DAS = 1,4-3,6-Dianhydrosorbit
3) MAS = 1,4-Monoanhydrosorbit
4) DAM = 1,4-3,6-Dianhydromannit
5) DAI = 1,4-3,6-Dianhydroidit

Diese Gemische sind zu Folien verarbeitbar.

+) PVAL = Polyvinylalkohol

*Beispiel 1*

*Extrudierte Monofolien aus Polyvinylalkohol:*

Aus den oben genannten Gemischen aus Polyvinylalkohol und Mono- und/oder Dianhydrohexiten werden nach Vortrocknen im Vakuum bei 100°C 300 mm breite und ca. 50 µm dicke Monofolien unter folgenden Bedingungen nach dem chill-roll-Verfahren unter Verwendung einer 400 mm breiten Breitschlitzdüse extrudiert:

| | |
|---|---|
| Extruder: Einwellenextruder, Typ Reiffenhäuser S 30, Dreizonenschnecke mit dem Kompressionsverhältnis 1 : 2,5 | |
| Zylindertemperaturen: | 190-210°C |
| Temperatur der Düse: | 230°C |
| Temperatur der Abzugswalzen: | 90°C |
| Schneckendrehzahl: | 50 U/min |

Die so hergestellten Monofolien sind weich, zäh, tiefziehfähig, farblos und transparent. In trockenem Zustand betragen ihre Permeationskoeffizienten:

für Sauerstoff:
$$0{,}00002 \cdot 10^{-9} \quad \frac{cm^3 \cdot (NTP) \cdot cm}{cm^2 \cdot sec \cdot cm_{Hg}}$$

für Kohlendioxid:
$$0{,}00005\text{-}0{,}00006 \cdot 10^{-9} \quad \frac{cm^3 \cdot (NTP) \cdot cm}{cm^2 \cdot sec \cdot cm_{Hg}}$$

Zum Vergleich: Die Permeationskoeffizienten einer Monofolie aus einem 20% Ethylen enthaltenden Copolymeren aus Ethylen und Vinylalkohol (GL-Resin, Typ GL-D von Nippon Gohsei) betragen, ebenfalls in trockenem Zustand:

für Sauerstoff:
$$0{,}000035 \cdot 10^{-9} \quad \frac{cm^3 \cdot (NTP) \cdot cm}{cm^2 \cdot sec \cdot cm_{Hg}}$$

für Kohlendioxid:
$$0{,}000065 \cdot 10^{-9} \quad \frac{cm^3 \cdot (NTP) \cdot cm}{cm^2 \cdot sec \cdot cm_{Hg}}$$

*Beispiel 2*

*Coextrudierte Verbundfolien aus Polyvinylalkohol und Polyamid*

Aus den oben genannten Gemischen aus Polyvinylalkohol und Mono- und/oder Dianhydrohexiten sowie aus einem Gemisch aus 95% Polyamid-6 und 15% Polyamid-66 werden unter folgenden Bedingungen unter Verwendung einer 900 mm breiten Breitschlitz-Coextrusionsdüse nach dem chill-roll-Verfahren 800 mm breite Verbundfolien, die aus je einer ca. 25 µm dicken Schicht aus Polyvinylalkohol und Polyamid bestehen, hergestellt:

| | |
|---|---|
| Extruder: Einwellenextruder, Typ Reiffenhäuser S 45 Dreizonenschnecke mit dem Kompressionsverhältnis 1 : 2,5 | |
| Zylindertemperaturen: | |
| PVAL⁺⁾-Extruder: | 210-230°C |
| PA⁺⁺⁾-Extruder: | 230°C |
| Schneckendrehzahl: | |
| PVAL-Extruder: | 60 U/min |
| PA-Extruder: | 53 U/min |
| Temperatur der Düse: | 230°C |
| Temperatur der Abzugswalzen | 110°C |

+) PVAL = Polyvinylalkohol
++) PA = Polyamid

Die so erhaltenen PVAL/PA-Verbundfolien sind weich, zäh, tiefziehfähig, farblos und transparent. Die PVAL- und die PA-Schichten haften fest aneinander.

**Patentansprüche**

1. Weichgemachter Polyvinylalkohol, dadurch gekennzeichnet, dass er 1 bis 35 Gew.-%, bezogen auf die gesamte Mischung, eines oder mehrerer 1,4-Monoanhydrohexite und/oder eines oder mehrerer 1,4-3,6-Dianhydrohexite enthält.
2. Gasundurchlässige Folien aus dem weichgemachten Polyvinylalkohol gemäss Anspruch 1.
3. Gasundurchlässige Verbundfolien aus einer Schicht aus dem weichgemachten Polyvinylalkohol aus Anspruch 1 und mindestens einer weiteren Schicht aus thermoplastischem Kunststoff.
4. Gasundurchlässige Verbundfolie aus einer Schicht aus dem weichgemachten Polyvinylalkohol in Anspruch 1 und mindestens einer Schicht aus Polyamid.

**Claims**

1. Plasticised polyvinyyl alcohol, characterised in that it contains 1 to 35% by weight, based on the total mixture, of one or more 1,4-monoanhydrohexitols and/or one or more 1,4-3,6-dianhydrohexitols.
2. Gas-impermeable films made from the plasticised polyvinyl alcohol according to claim 1.
3. Gas-impermeable composite films consisting of a layer of the plasticised polyvinyl alcohol from claim 1 and at least one further layer of a thermoplastic material.
4. Gas-impermeable composite films consisting of a layer of the plasticised polyvinyl alcohol in claim 1 and at least one layer of polyamide.

**Revendications**

1. Alcool polyvinylique plastifié, caractérisé en ce qu'il contient de 1 à 35% en poids par rapport au mélange total d'un ou plusieurs 1,4-monoanhydrohexitols et/ou d'un ou plusieurs 1,4-3,6-dianhydrohexitols.
2. Feuilles imperméables aux gaz consistant en l'alcool polyvinylique plastifié selon la revendication 1.
3. Feuilles composites imperméables aux gaz consistant en une couche de l'alcool polyvinylique plastifié selon la revendication 1 et au moins une autre couche d'une résine synthétique thermoplastique.
4. Feuilles composites imperméables aux gaz consistant en une couche de l'alcool polyvinylique plastifié de la revendication 1 et au moins une couche de polyamide.